# EUROPEAN PATENT SPECIFICATION

(11) **EP 1 154 507 B1**
(45) Date of publication and mention of the grant of the patent: **11.07.2007**
(21) Application number: 01110977.4
(22) Date of filing: 07.05.2001
(51) Int. Cl.: H01M 10/34, H01M 10/28, H01M 10/30

(54) **Rectangular alkaline storage battery and battery module and battery pack using the same**
Rechteckige alkalische Batterie und Batteriemodul und Batterie-Pack zu seiner Verwendung
Batterie alcaline rectangulaire et module de batterie et bloc de batterie l'utilisant

(30) Priority: 08.05.2000 JP 2000134542
(43) Date of publication of application: 14.11.2001
(73) Proprietor: MATSUSHITA ELECTRIC INDUSTRIAL CO., LTD, Kadoma-shi, Osaka 571-8501 (JP); Toyota Jidosha Kabushiki Kaisha, Toyota-shi, Aichi-ken, 471-8571 (JP)
(72) Inventor: Yuasa, Shinichi, Kyotanabe-shi, Kyoto 610-0532 (JP); Morishita, Nobuyasu, Toyohashi-shi, Aichi 441-8104 (JP); Taniguchi, Akihiro, Toyohashi-shi, Aichi 441-8053 (JP); Ikoma, Munehisa, Shiki-gun, Nara 636-0243 (JP)
(74) Representative: TBK-Patent

(56) References cited:
- EP-A- 1 091 438
- WO-A-98/31059
- US-A- 5 558 950

## Description

The present invention relates to an alkaline storage battery represented by a nickel-cadmium storage battery and nickel metal-hydride battery, in particular, to a rectangular alkaline storage battery. More specifically, the present invention relates to the design of a group of electrode plates, an electrolyte, and a container that optimizes the balance in the quantity of heat generation, heat release, and heat accumulation.

An alkaline storage battery represented by a nickel-cadmium storage battery and nickel metal-hydride battery has high energy density and excellent reliability. Therefore, these batteries are widely used as a power source for devices including, e.g., video tape recorders, laptop computers, and portable equipment such as portable telephones. For practical applications, several to tens of cells housed in a resin case or tube are generally used as a unit.

These alkaline storage batteries have a battery capacity of about 0.5 Ah to 3 Ah, and the devices including them consume less power. Thus, the quantity of heat generation per cell during charge/discharge is small. Therefore, even in a resin case or tube, the balance between heat generation and heat release is well maintained, so that there is no remarkable problem associated with a rise in the temperature of the battery.

In recent years, storage batteries with high energy density, high power, and high reliability have been demanded as a power source for movable bodies, ranging from household appliances to electric vehicles, such as pure electric vehicles and hybrid electric vehicles using an electric motor to provide auxiliary driving force. When the battery is used in these applications, it requires a battery capacity of about several to 100 Ah. Also, a larger battery voltage is necessary to ensure sufficient driving force of a vehicle. Thus, it is required to connect several to hundreds of cells in series and to allow tens to hundreds of amperes of load current to be input/output.

A battery generates the heat of reaction caused by electrode reaction and Joule heat during charge/discharge, which results in a rise in the temperature of the battery. As the battery capacity and load current of the cell increases, the quantity of heat generation is increased. Thus, heat release to the outside of the battery is delayed and the heat generated is stored in the battery. Consequently, the battery temperature is more raised than in a conventional small battery. In addition, a battery module, which includes such cells electrically connected in series, and a battery pack, which includes the battery modules electrically connected in series or in parallel, are provided with tens to hundreds of adjacent cells. Thus, heat release is delayed further, causing the battery temperature rise to be accelerated. Such an increase in the temperature rise of the battery during charge/discharge promotes a reduction in charge efficiency and decomposition of the binder or the like in the electrode and separators within the battery, so that the cycle life of the battery is shortened.

The prior art WO 98/31059 discloses a mechanically and thermally improved rechargeable batteries, modules and fluid-cooled battery systems. The battery has an optimized thickness to width to height aspect ratio providing the battery with balanced optimal properties. This allows for maximum capacity and power output, while eliminating deleterious side effects. In a module, the batteries are bound within a bundling/compression means under external mechanical compression. The width of the coolant flow channels allows for maximum heat transfer. Finally, the batteries, modules and packs can also include means for providing variable thermal insulation to at least that portion of the rechargeable battery system which is most directly exposed to ambient thermal conditions, so as to maintain the temperature of the system within the desired operating range thereof under variable ambient conditions.

As the result of the study on the relationship in the quantity of heat generation, heat release, and heat accumulation of a battery, the present inventors have obtained the following insight.

The quantity of heat generation of a battery depends on the internal resistance (R: the total of the resistance of electrode reaction and that of a current collecting portion) of the battery. The internal resistance is determined by a voltage drop in the application of direct current. Also, the quantity of heat generation is expressed by the product (RI²) of the internal resistance and the square of load current (I). The quantity of heat release depends on thermal conductivity, i.e., the heat transport from the inside to the outside of the battery. Therefore, the thickness of an electrode plate and that of a group of electrode plates, including two or more electrode plates and separators, becomes an important factor. Moreover, the quantity of heat release is affected significantly by a means for removing heat from the battery (the type of coolant, such as air and water passing through the outside of the battery, and the amount thereof). The quantity of heat accumulation depends on the amount of electrolyte and its heat capacity.

The battery temperature rise is determined by the balance in the quantity of heat generation, heat release, and heat accumulation. Specifically, when current is applied to the battery, heat is generated by the magnitude of the current and the internal resistance according to the state of the battery (the state of charge). The heat thus generated increases the battery temperature in accordance with the magnitude of heat accumulation of the battery. Also, the heat generated in the battery is transferred to the outside, and thus the heat corresponding to the difference in temperature between the inside and the outside of the battery is released. When such power input/output is repeated near the predetermined state of the battery (the state of charge), the battery temperature is increased in proportion corresponding to the magnitude and balance in the quantity of heat generation, heat release, and heat accumulation. Thus, the battery temperature is apparently constant.

Therefore, to achieve an alkaline storage battery that provides suppressed temperature rise, high power, and long lifetime, it is necessary to design a group of electrode plates, an electrolyte, and a container so as to optimize the balance in the quantity of heat generation, heat release, and heat accumulation of a battery.

Therefore, with the foregoing in mind, it is an object of the present invention to provide a rectangular alkaline storage battery that provides the optimum balance in the quantity of heat generation, heat release, and heat accumulation, high power, and excellent battery characteristics even when charged/discharged repeatedly and used for a long time, and a battery module and battery pack using the same.

To achieve the above object, a rectangular alkaline storage battery of the present invention includes a plurality of positive electrode plates, a plurality of negative electrode plates, a plurality of separators, each being located between the positive electrode plate and the negative electrode plate, an alkaline electrolyte, and a container for housing the positive and negative electrode plates, the separators, and the electrolyte. In the battery, internal resistance is 5 mΩ or less, a group of electrode plates including the positive and negative electrode plates and the separators has a thickness of 30 mm or less, a heat release area is 60 cm² or more, and the amount of the electrolyte is 1.3 to 8.0 g/Ah. This configuration can achieve a rectangular alkaline storage battery that provides the optimum balance in the quantity of heat generation, heat release, and heat accumulation, high power, and excellent battery characteristics even when charged/discharged repeatedly and used for a long time.

In the above configuration of a rectangular alkaline storage battery of the present invention, it is preferable that positive and negative current collecting plates connected to the positive electrode plates and the negative electrode plates, respectively, are provided at both side faces of the group of electrode plates in the width direction, and that the group of electrode plates is housed in the container with each current collecting plate fixed on the short side faces of the container.

In the above configuration of a rectangular alkaline storage battery of the present invention, it is preferable that the positive electrode plates are based on nickel oxide, and that the negative electrode plates contain hydrogen absorbing alloy that can absorb/desorb hydrogen electrochemically.

In the above configuration of a rectangular alkaline storage battery of the present invention, it is preferable that the separator has a thickness of 0.1 to 0.3 mm.

In the above configuration of a rectangular alkaline storage battery of the present invention, it is preferable that the electrolyte has an ionic conductivity of 400 to 600 mS/cm.

In the above configuration of a rectangular alkaline storage battery of the present invention, it is preferable that a material of the container has a thermal conductivity of 0.15 W/m·K or more, and that the container has a thickness of 0.5 to 1.5 mm. As a material of the container that satisfies this requirement, e.g., a resin material, such as a polymer alloy based on polyphenylene ether resin and polyolefin resin can be used.

A battery module of the present invention includes 3 to 40 cells electrically connected in series. The rectangular alkaline storage battery of the present invention is used as said cell.

In the above configuration of a battery module of the present invention, it is preferable that the battery module includes a plurality of containers, each of which is in the form of a rectangular solid having short side faces with a small width and long side faces with a large width; the containers are formed into an integral container by using the short side face as a partition between the adjacent containers; a group of electrode plates is housed in each container so that a cell is provided for each container, and the cells are connected electrically in series.

In the above configuration of a battery module of the present invention it is preferable that thermal conductivity per battery module is 0.3 W/m·K or more.

This configuration can achieve a battery module that provides suppressed temperature rise, high power, and excellent battery characteristics even when charged/discharged repeatedly and used for a long time.

A battery pack of the present invention includes a plurality of battery modules electrically connected in series and/or in parallel and a coolant flow path formed between the adjacent battery modules. The battery module of the present invention is used as said battery module. This configuration can achieve a battery pack that provides suppressed temperature rise, high power, and excellent battery characteristics even when charged/discharged repeatedly and used for a long time.

As described above, the present invention can achieve a rectangular alkaline storage battery that provides the optimum balance in the quantity of heat generation, heat release, and heat accumulation, high power, and excellent battery characteristics even when charged/discharged repeatedly and used for a long time. In addition, the use of a rectangular alkaline storage battery of the present invention can achieve a battery module and a battery pack that provide suppressed temperature rise, high power, and excellent battery characteristics even when charged/discharged repeatedly and used for a long time.
FIG. 1 is a perspective view showing the configuration of a group of electrode plates of an embodiment of the present invention.
FIG. 2 is a perspective view showing an integral container for a battery module of an embodiment of the present invention.

Hereinafter, an embodiment of the present invention will be described taking a rectangular nickel metal-hydride battery for an example; the nickel metal-hydride battery is a typical rectangular alkaline storage battery.

A positive electrode of nickel and negative electrode of hydrogen absorbing alloy used in this embodiment were prepared in the following manner.

For a nickel hydroxide solid solution that acts as an active material of the nickel positive electrode, Co and Zn were mixed to form particles of solid solution, having an average particle size of 10 µm and a bulk density of about 2.0 g/cc. To 100 parts by weight of the nickel hydroxide solid solution particles were added 70 parts by weight of cobalt hydroxide and a suitable amount of pure water, which then was mixed and dispersed, resulting in an active material slurry. A foamed nickel porous substrate, having a porosity of 95 % and thickness of 1.3 mm, was filled with the active material slurry and then dried at 80 °C in a drier. Thereafter, the substrate was rolled to a thickness of 0.4 mm by pressure and cut to a rectangular shape of predetermined size shown in the following Table 1, thus providing the nickel positive electrode.

A hydrogen absorbing alloy with the alloy composition of MmNi_{3.5} Co_{0.75}Al_{0.3} Mn_{0.4} was ground in a ball mill. The alloy powder obtained, having an average particle size of about 20 µm, was applied with a binder to a perforated steel sheet and then dried. Thereafter, the perforated steel sheet was rolled to a thickness of 0.28 mm and cut to a rectangular shape of predetermined size shown in the following Table 1, thus providing the hydrogen absorbing alloy negative electrode.

**TABLE 1**

| Battery capacity [Ah] | Electrode group thickness [mm] | Positive electrode size [mm×mm] | Positive electrode thickness [mm] | Number of positive electrodes [sheet] | Negative electrode size [mm×mm] | Negative electrode thickness [mm] | Number of negative electrodes [sheet] |
|---|---|---|---|---|---|---|---|
| 8 | 10 | 48×83 | 0.4 | 9 | 48×83 | 0.28 | 10 |
| 8 | 20 | 48×48 | 0.4 | 16 | 48×48 | 0.28 | 17 |
| 8 | 30 | 48×32 | 0.4 | 25 | 48×32 | 0.28 | 26 |
| 8 | 35 | 48×28 | 0.4 | 29 | 48×28 | 0.28 | 30 |

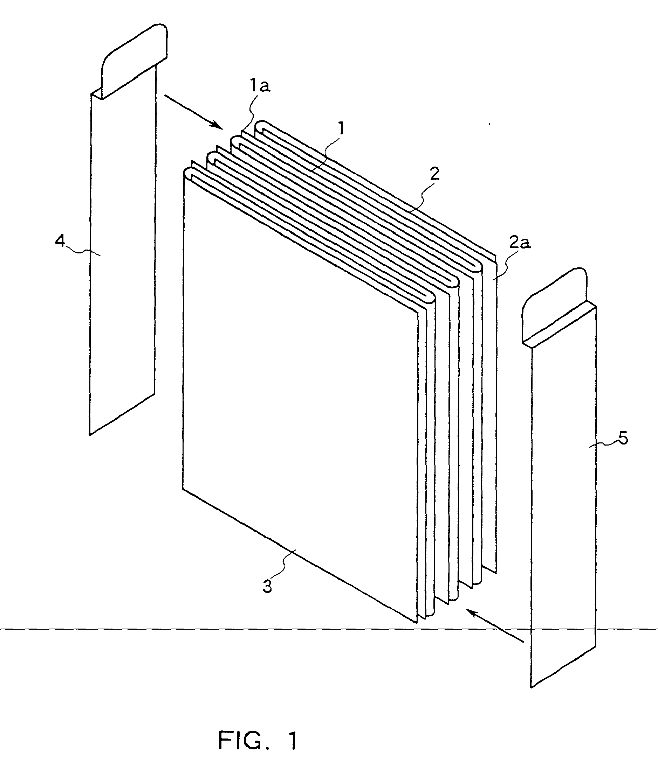

FIG.1 is a perspective view showing the configuration of a group of electrode plates of a rectangular nickel metal-hydride battery according to an embodiment of the present invention.

As shown in FIG. 1, the positive electrode plates 1 and the negative electrode plates 2 presented in Table 1 were layered alternately via separators 3, so that groups of electrode plates with different electrode thickness were provided. The separators 3 were rectangular similar to the positive and negative electrode plates and made of a nonwoven polypropylene fabric, which was processed to have a hydrophilic property. Current collecting plates 4, 5 of nickel-plated iron were welded to the end faces of leads 1a, 2a located on both side faces of the group of electrode plates in the width direction, resulting in positive and negative electrode terminals. The group of electrode plate, together with an electrolyte including potassium hydroxide as the main component, was housed in a rectangular container with the current collecting plates 4, 5 fixed respectively on the short side faces of the container. The container was made of a polymer alloy based on polypropylene resin and polyphenylether resin. Thus, a rectangular nickel metal-hydride battery with a battery capacity of 8 Ah was provided.

Using the rectangular nickel metal-hydride battery (cell) with the above configuration, the following factors of the battery were changed to investigate the relationship of each factor to the battery's temperature rise and cycle life during charge/discharge: internal resistance, the thickness of a group of electrode plates, a heat release area, the amount of electrolyte, the ionic conductivity of the electrolyte, the thickness of a container, and the thermal conductivity of a container material.

Internal resistance is the total of the resistance of electrode reaction, the resistance associated with the ionic conductivity of electrolyte, and the resistance of a current collecting portion and electrode core material. Therefore, the internal resistance is affected significantly by a battery capacity, an electrode plate area, and the material, thickness, or shape of a current collecting portion and electrode core material. However, since experiments of this embodiment were conducted so that the battery capacity and electrode plate area of the battery were fixed substantially, their effect on the internal resistance was able to be ignored. Thus, the battery internal resistance was changed by varying the thickness of the current collecting plates 4, 5 of nickel-plated iron and that of the nickel plating.

Moreover, the internal resistance was measured in the following manner: the actual capacity [Ah] of the battery produced was determined by a method for measuring utilization factor, which will be described later; the battery in the state of discharge was charged by 50 % of the actual capacity and allowed to stand for 3 hours at an environmental temperature of 25 °C; then electric current was applied to the battery under the conditions shown in the following Table 2, and the battery voltage was measured after 10 seconds. A graph that plotted the applied current value as the horizontal axis and the measured battery voltage as the vertical axis was prepared. The slope obtained by this graph was considered to be the internal resistance of the battery, based on Ohm's law expressed by the formula V = R × I. Thus, the internal resistance of the battery was calculated in the above manner using a least square method.

**TABLE 2**

| State | Current value [A] | Time [second] |
|---|---|---|
| Discharge | 10 | 10 |
| Rest | - | 60 |
| Charge | 10 | 10 |
| Rest | - | 60 |
| Discharge | 25 | 10 |
| Rest | - | 60 |
| Charge | 25 | 10 |
| Rest | - | 60 |
| Discharge | 40 | 10 |
| Rest | - | 60 |
| Charge | 40 | 10 |
| Rest | - | 60 |
| Discharge | 60 | 10 |
| Rest | - | 60 |
| Charge | 60 | 10 |
| Rest | - | 60 |
| Discharge | 80 | 10 |
| Rest | - | 60 |
| Charge | 80 | 10 |
| Rest | - | 60 |
| Discharge | 100 | 10 |
| Rest | - | 60 |

The thickness of a group of electrode plates means the thickness of a collection of the positive electrode plates 1, the negative electrode plates 2, and the separators 3, being measured in mm. The heat release area refers to the area with which a coolant comes into direct contact at the outer surface of the battery, being measured in cm². The amount of electrolyte is the weight of the electrolyte per ampere-hour capacity, being measured in g/Ah. The ionic conductivity of the electrolyte depends on the specific gravity of the electrolyte. The cycle life represents the cycle number, at which the battery capacity is reduced to 80 % or less of the initial capacity.

### (1) The relationship of internal resistance to temperature rise and cycle life

The following Table 3 shows the result of measurements of temperature rise and cycle life of the battery during charge/discharge, where the thickness of a group of electrode plates was 20 mm, a heat release area was 100 cm², the amount of electrolyte was 3 g/Ah, a separator thickness was 0.2 mm, the ionic conductivity of the electrolyte was 500 mS/cm, and internal resistance was changed from 3 to 6 mΩ. The "utilization factor" in Table 3 was calculated in the following manner: the battery was charged at a charging rate of 0.1 CmA for 15 hours and then discharged at a discharging rate of 0.2 CmA until the battery voltage was 1.0 V; this cycle was repeated five times; a battery capacity was measured in the fifth cycle, and the battery capacity thus measured is divided by a theoretical capacity (obtained by multiplying the weight of nickel hydroxide impregnated into the positive electrode by 289 mAh/g, which is a battery capacity provided when nickel hydroxide reacts with an electron). Thus, the utilization factor was calculated.

**TABLE 3**

| Battery internal resistance [mΩ] | Electrode group thickness [mm] | Heat release area [cm²] | Amountof electrolyte [g/Ah] | Separator thickness [mm] | Ionic conductivity [mS/cm] | Utilization factor [%] | Temperature rise [C°] | Cycle life |
|---|---|---|---|---|---|---|---|---|
| 3 | | | | | | 95 | 5 | 1000 |
| 4 | 20 | 100 | 3 | 0.2 | 500 | 95 | 5 | 1000 |
| 5 | | | | | | 92 | 7 | 900 |
| 6 | | | | | | 88 | 14 | 300 |

As shown in Table 3, when the internal resistance was 3 mΩ, 4 mΩ, and 5 mΩ, the temperature rise of the battery during charge/discharge was 5 °C, 5 °C, and 7 °C, and the cycle life was 1000, 1000, and 900, respectively. On the other hand, when the internal resistance was 6 mΩ, the temperature rise was increased to 14 °C and the cycle life was reduced to 300. The consideration of this result is given below. As the internal resistance increases, the quantity of heat generation of the battery during charge/discharge is increased, causing an increase in the temperature rise of the battery. The increased temperature rise promotes a reduction in charge efficiency and decomposition of the binder or the like in the electrode and separators within the battery, so that the cycle life of the battery is shortened.

Therefore, it is desirable that the battery's internal resistance is 5 mΩ or less.

### (2) The relationship of the thickness of a group of electrode plates to temperature rise and cycle life

The following Table 4 shows the result of measurements of temperature rise and cycle life of the battery during charge/discharge, where the battery's internal resistance was 4 mΩ, a heat release area was 100 cm², the amount of electrolyte was 3 g/Ah, a separator thickness was 0.2 mm, the ionic conductivity of the electrolyte was 500 mS/cm, and the thickness of a group of electrode plates was changed from 10 to 35 mm. In this case, the heat release area was adjusted to be constant (100 cm²) between the batteries differing in the thickness of a group of electrode plates by affixing an insulating sheet on the outer surface of the container.

**TABLE 4**

| Battery internal resistance (mΩ) | Electrode group thickness [mm] | Heat release area [cm²] | Amount of electrolyte [g/Ah] | Separator thickness [mm] | Ionic conductivity [mS/cm] | Utilization factor [%] | Temperature rise [C°] | Cycle life |
|---|---|---|---|---|---|---|---|---|
| | 10 | | | | | 94 | 7 | 900 |
| 4 | 20 | 100 | 3 | 0.2 | 500 | 95 | 5 | 1000 |
| | 30 | | | | | 93 | 7 | 900 |
| | 35 | | | | | 88 | 12 | 400 |

As shown in Table 4, when the thickness of a group of electrode plates was 10 mm, 20 mm, and 30 mm, the temperature rise of the battery during charge/discharge was 7 °C, 5 °C, and 7 °C, and the cycle life was 900, 1000, and 900, respectively. On the other hand, when the thickness of a group of electrode plates was 35 mm, the temperature rise was increased to 12 °C and the cycle life was reduced to 400. The consideration of this result is given below. In the case where the number of electrode plates and the thickness of a group of electrode plates is large, the thermal diffusivity is lowered, which in turn decreases the thermal conductivity in the battery. Thus, the temperature rise of the battery is increased. The increased temperature rise promotes a reduction in charge efficiency and decomposition of the binder or the like in the electrode and separators within the battery, so that the cycle life of the battery is shortened.

Therefore, it is desirable that the thickness of a group of electrode plates is 30 mm or less.

### (3) The relationship of a heat release area to temperature rise and cycle life

The following Table 5 shows the result of measurements of temperature rise and cycle life of the battery during charge/discharge, where the battery's internal resistance was 4 mΩ, the thickness of a group of electrode plates was 20 mm, the amount of electrolyte was 3 g/Ah, a separator thickness was 0.2 mm, the ionic conductivity of the electrolyte was 500 mS/cm, and a heat release area was changed from 50 to 120 cm². In this case, the heat release area was adjusted to a predetermined area by affixing an insulating sheet on the outer surface of the container.

**TABLE 5**

| Battery internal resistance [mΩ] | Electrode group thickness [mm] | Heat release area [cm²] | Amountof electrolyte [g/Ah] | Separator thickness [mm] | Ionic conductivity [mS/cm] | Utilization factor [%] | Temperature rise [C°] | Cycle life |
|---|---|---|---|---|---|---|---|---|
| | | 50 | | | | 87 | 13 | 300 |
| | | 60 | | | | 93 | 7 | 900 |
| 4 | 20 | 80 | 3 | 0.2 | 500 | 95 | 5 | 1000 |
| | | 100 | | | | 95 | 5 | 1000 |
| | | 120 | | | | 95 | 4 | 1000 |

As shown in Table 5, when the heat release area was 60 cm², 80 cm², 100 cm², and 120 cm², the temperature rise of the battery during charge/discharge was 7 °C, 5 °C, 5 °C, and 4 °C, and the cycle life was 900, 1000, 1000 and 1000, respectively. On the other hand, when the heat release area was 50 cm², the temperature rise was increased to 13 °C and the cycle life was reduced to 300. The consideration of this result is given below. In the case where the heat release area is small, the quantity of heat release is decreased. Thus, the temperature rise of the battery is increased. The increased temperature rise promotes a reduction in charge efficiency and decomposition of the binder or the like in the electrode and separators within the battery, so that the cycle life of the battery is shortened.

Therefore, it is desirable that a heat release area is 60 cm² or more.

### (4) The relationship of the amount of electrolyte to temperature rise and cycle life

The following Table 6 shows the result of measurements of temperature rise and cycle life of the battery during charge/discharge, where the battery's internal resistance was 4 mΩ, the thickness of a group of electrode plates was 20 mm, a heat release area was 100 cm², a separator thickness was 0.2 mm, the ionic conductivity of electrolyte was 500 mS/cm, and the amount of the electrolyte was changed from 1.2 to 8.1 g/Ah.

**TABLE 6**

| Battery internal resistance [mΩ] | Electrode group thickness [mm] | Heat release area [cm²] | Amount of electrolyte [g/Ah] | Separator thickness [mm] | Ionic conductivity [mS/cm] | Utilization factor [%] | Temperature rise [C°] | Cycle life |
|---|---|---|---|---|---|---|---|---|
| | | | 1.2 | | | 82 | 12 | 400 |
| | | | 1.3 | | | 93 | 7 | 900 |
| 4 | 20 | 100 | 3 | 0.2 | 500 | 95 | 5 | 1000 |
| | | | 6 | | | 95 | 5 | 1000 |
| | | | 8 | | | 95 | 4 | 900 |
| | | | 8.1 | | | 95 | 4 | 500 |

As shown in Table 6, when the amount of electrolyte was 1.3 g/Ah, 3 g/Ah, 6 g/Ah, and 8 g/Ah, the temperature rise of the battery during charge/discharge was 7 °C, 5 °C, 5 °C, and 4 °C, and the cycle life was 900, 1000, 1000, and 900, respectively. On the other hand, when the amount of electrolyte was 1.2 g/Ah, the temperature rise was increased to 12 °C and the cycle life was reduced to 400. Also, when the amount of electrolyte was 8.1 g/Ah, the temperature rise was 4 °C, while the cycle life was reduced to 500. The consideration of this result is given below. In the case where the amount of electrolyte is small, the quantity of heat accumulation is decreased. Thus, the quantity of heat generation of the battery during charge/discharge is increased, causing an increase in the temperature rise of the battery. The increased temperature rise promotes a reduction in charge efficiency and decomposition of the binder or the like in the electrode and separators within the battery, so that the cycle life of the battery is shortened. Moreover, in the case where the amount of electrolyte is large, the quantity of heat accumulation is increased. Thus, the quantity of heat generation of the battery during charge/discharge is decreased, causing a decrease in the temperature rise of the battery. However, the cycle life of the battery is shortened because of a rise in the internal pressure of the battery resulting from lowered charge efficiency.

Therefore, it is desirable that the amount of electrolyte is 1.3 to 8.0 g/Ah.

To summarize the results of (1) to (4), a rectangular nickel metal-hydride battery that provides the optimum balance in the quantity of heat generation, heat release, and heat accumulation, high power, and excellent battery characteristics even when charged/discharged repeatedly and used for a long time can be achieved by satisfying the following: internal resistance is 5 mΩ or less; the thickness of a group of electrode plates is 30 mm or less; a heat release area is 60 cm² or more, and the amount of electrolyte is 1.3 to 8.0 g/Ah.

### (5) The relationship of a separator thickness to temperature rise and cycle life

The following Table 7 shows the result of measurements of temperature rise and cycle life of the battery during charge/discharge, where the battery's internal resistance was 4 mΩ, the thickness of a group of electrode plates was 20 mm, a heat release area was 100 cm², the amount of electrolyte was 3 g/Ah, the ionic conductivity of the electrolyte was 500 mS/cm, and a separator thickness was changed from 0.08 to 0.32 mm.

**TABLE 7**

| Battery internal resistance [mΩ] | Electrode group thickness [mm] | Heat release area [cm²] | Amount of electrolyte [g/Ah] | Separator thickness [mm] | Ionic conductivity [mS/cm] | Utilization factor [%] | Temperature rise [C°] | Cycle life |
|---|---|---|---|---|---|---|---|---|
| | | | | 0.08 | | 95 | 7 | 400 |
| | | | | 0.1 | | 95 | 7 | 900 |
| | | | | 0.15 | | 95 | 4 | 1000 |
| 4 | 20 | 100 | 3 | 0.2 | 500 | 95 | 4 | 1000 |
| | | | | 0.25 | | 95 | 4 | 1000 |
| | | | | 0.3 | | 93 | 7 | 900 |
| | | | | 0.32 | | 85 | 12 | 500 |

As shown in Table 7, when the separator thickness was 0.1 mm, 0.15 mm, 0.2 mm, 0.25 mm, and 0.3 mm, the temperature rise of the battery during charge/discharge was 7 °C, 4 °C, 4 °C, 4 °C, and 7 °C, and the cycle life was 900, 1000, 1000, 1000, and 900, respectively. On the other hand, when the separator thickness was 0.08 mm, the temperature rise was 7 °C, while the cycle life was reduced to 400. Also, when the separator thickness was 0.32 mm, the temperature rise was increased to 12°C and the cycle life was reduced to 500. The consideration of this result is given below. In the case where the separator thickness is small, the amount of electrolyte to be absorbed into the separator is reduced. Consequently, the amount of electrolyte in the electrode is increased, which leads to an increase in the quantity of heat accumulation. Thus, the quantity of heat generation of the battery during charge/discharge is decreased, causing a decrease in the temperature rise of the battery. However, the cycle life of the battery is shortened because of a rise in the internal pressure of the battery resulting from lowered charge efficiency. Moreover, in the case where the separator thickness is large, the amount of electrolyte to be absorbed into the separator is increased. Consequently, the amount of electrolyte in the electrode is decreased, which leads to a large resistance of the electrode reaction. Thus, the quantity of heat generation of the battery during charge/discharge is increased, causing an increase in the temperature rise of the battery. The increased temperature rise promotes a reduction in charge efficiency and decomposition of the binder or the like in the electrode and separators within the battery, so that the cycle life of the battery is shortened.

Therefore, it is desirable that a separator thickness is 0.1 to 0.3 mm.

### (6) The relationship of the ionic conductivity of electrolyte to temperature rise and cycle life

The following Table 8 shows the result of measurements of temperature rise and cycle life of the battery during charge/discharge, where the battery's internal resistance was 4 mΩ, the thickness of a group of electrode plates was 20 mm, a heat release area was 100 cm², the amount of electrolyte was 3 g/Ah, a separator thickness was 0.2 mm, and the ionic conductivity of the electrolyte was changed from 370 to 650 mS/cm. In this case, the ionic conductivity of the electrolyte was adjusted to a predetermined value by changing the specific gravity of the electrolyte.

**TABLE 8**

| Battery internal resistance [mΩ) | Electrode group thickness [mm] | Heat release area [cm²] | Amount of electrolyte [g/Ah] | Separator thickness [mm] | Ionic conductivity [mS/cm] | Utilization factor [%] | Temperature rise [C°] | Cycle life |
|---|---|---|---|---|---|---|---|---|
| | | | | | 370 | 75 | 12 | 400 |
| | | | | | 400 | 96 | 7 | 900 |
| 4 | 20 | 100 | 3 | 0.2 | 500 | 98 | 5 | 1000 |
| | | | | | 600 | 96 | 7 | 900 |
| | | | | | 650 | 88 | 13 | 400 |

As shown in Table 8, when the ionic conductivity of the electrolyte was 400 mS/cm, 500 mS/cm, and 600 mS/cm, the temperature rise of the battery during charge/discharge was 7 °C, 5 °C, and 7 °C, and the cycle life was 900, 1000, and 900, respectively. On the other hand, when the ionic conductivity of the electrolyte was 370 mS/cm, the temperature rise was increased to 12 °C and the cycle life was reduced to 400. Also, when the ionic conductivity was 650 mS/cm, the temperature rise was increased to 13 °C and the cycle life was reduced to 400. The consideration of this result is given below. In the case where the ionic conductivity of the electrolyte is small, the specific gravity of the electrolyte is decreased. Consequently, the amount of liquid (cc) becomes excessive, which leads to a large resistance of the electrode reaction. Thus, the quantity of heat generation of the battery during charge/discharge is increased, causing an increase in the temperature rise of the battery. Moreover, in the case where the ionic conductivity of the electrolyte is large, the specific gravity of the electrolyte is increased. Consequently, the amount of liquid (cc) becomes small, which leads to a decrease in the quantity of heat accumulation because the heat accumulation quantity depends on the electrolyte and its heat capacity even if the heat release of the electrolyte is the same. Thus, the temperature rise of the battery is increased. The increased temperature rise promotes a reduction in charge efficiency and decomposition of the binder or the like in the electrode and separators within the battery, so that the cycle life of the battery is shortened.

Therefore, it is desirable that the ionic conductivity of electrolyte is 400 to 600 mS/cm.

### (7) The relationship of the thermal conductivity of a container material to temperature rise and cycle life

The following Table 9 shows the result of measurements of temperature rise and cycle life of the battery during charge/discharge, where the battery's internal resistance, the thickness of a group of electrode plates, a heat release area, the amount of electrolyte, a separator thickness, and the ionic conductivity of the electrolyte were each set to a desired value described in (1) to (6), the thickness of a container was 1.0 mm, and the thermal conductivity of a material of the container was changed from 0.13 to 0.18 W/m·K. The thermal conductivity of the container material depends on the thermal conductivity of resin to be used; for polymer alloy resin, it depends on the mixing proportion.

**TABLE 9**

| Container thickness [mm] | Thermal conductivity [W/m.K] | Utilization factor [%] | Temperature rise [°C] | Cycle life |
|---|---|---|---|---|
| | 0.13 | 82 | 14 | 400 |
| 1.0 | 0.14 | 88 | 11 | 500 |
| | 0.15 | 93 | 7 | 900 |
| | 0.18 | 95 | 5 | 1000 |

As shown in Table 9, when the thermal conductivity of the container material was 0.15 W/m·K and 0.18 W/m·K, the temperature rise of the battery during charge/discharge was 7 °C and 5 °C, and the cycle life was 900 and 1000, respectively. On the other hand, when the thermal conductivity of the container material was 0.13 W/m·K and 0.14 W/m·K, the temperature rise of the battery was increased to 14 °C and 11 °C and the cycle life was reduced to 400 and 500, respectively. The consideration of this result is given below. In the case where the thermal conductivity of the container material is small, the temperature rise of the battery is increased. The increased temperature rise promotes a reduction in charge efficiency and decomposition of the binder or the like in the electrode and separators within the battery, so that the cycle life of the battery is shortened.

### (8) The relationship of a container thickness to temperature rise and cycle life

The following Table 10 shows the result of measurements of temperature rise and cycle life of the battery during charge/discharge, where the battery's internal resistance, the thickness of a group of electrode plates, a heat release area, the amount of electrolyte, a separator thickness, and the ionic conductivity of the electrolyte were each set to a desired value described in (1) to (6), the thermal conductivity of a material of a container was 0.2 W/m·K, and the thickness of the container was changed from 0.4 to 1.6 mm.

**TABLE 10**

| Container thickness [mm] | Thermal conductivity [W/m·K] | Utilization factor [%] | Temperature rise [°C] | Cycle life |
|---|---|---|---|---|
| 0.4 | | 96 | 4 | 400 |
| 0.5 | | 96 | 4 | 900 |
| 0.8 | | 96 | 5 | 1000 |
| 1.0 | 0.2 | 96 | 5 | 1000 |
| 1.2 | | 95 | 5 | 1000 |
| 1.5 | | 93 | 7 | 900 |
| 1.6 | | 86 | 12 | 500 |

As shown in Table 10, when the container thickness was 0.5 mm, 0.8 mm, 1.0 mm, 1.2 mm, and 1.5 mm, the temperature rise of the battery during charge/discharge was 4 °C, 5 °C, 5 °C, 5 °C, and 7 °C, and the cycle life was 900, 1000, 1000, 1000, and 900, respectively. On the other hand, when the container thickness was 0.4 mm, the temperature rise was 4 °C, while the cycle life was reduced to 400. Also, when the container thickness was 1.6 mm, the temperature rise was increased to 12 °C and the cycle life was reduced to 500. The consideration of this result is given below. In the case where the container thickness is small, heat release becomes good. Thus, the quantity of heat generation of the battery during charge/discharge is decreased, causing a decrease in the temperature rise of the battery. However, the cycle life of the battery is shortened because of the deformation of the container resulting from a lack of the container thickness against the internal pressure of the battery. Moreover, in the case where the container thickness is large, heat release becomes poor. Thus, the quantity of heat generation of the battery during charge/discharge is increased, causing an increase in the temperature rise of the battery. The increased temperature rise promotes a reduction in charge efficiency and decomposition of the binder or the like in the electrode and separators within the battery, so that the cycle life of the battery is shortened.

Therefore, the results of (7) and (8) indicate that it is desirable that the thermal conductivity of a container material is 0.15 W/m·K or more, and a container thickness is 0.5 to 1.5 mm.

As the container material that satisfies this requirement, e.g., a resin material, such as a polymer alloy based on polyphenylene ether resin and polyolefin resin can be used.

Next, 3 to 40 rectangular nickel metal-hydride batteries (cells) with the above configuration were connected electrically in series to produce a battery module.

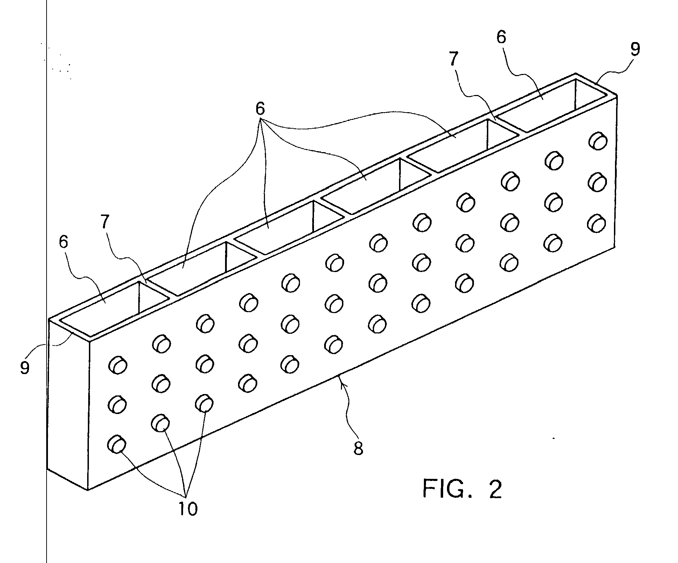

FIG. 2 is a perspective view of an integral container for a battery module including six rectangular nickel metal-hydride batteries (cells) electrically connected in series. As shown in FIG.2, six containers 6, each of which is in the form of a rectangular solid having short side faces with a small width and long side faces with a large width, are formed into an integral container 8 by using the short side face as a partition 7 between the adjacent containers 6. A group of electrode plates (not shown) is housed in each container 6. In other words, the adjacent cells are connected electrically in series at the upper portion of the partition 7. The electrode terminals (not shown) of the battery module are provided on the upper portions of both end walls 9, respectively. The upper openings of the integral container 8 are closed integrally with upper covers (not shown). Moreover, rib-shaped projections 10 for forming a coolant flow path between the adjacent battery modules are provided on the long side faces of the integral container 8.

### (9) The relationship of thermal conductivity per battery module to temperature rise and cycle life

The following Table 11 shows the result of measurements of temperature rise and cycle life of a battery module during charge/discharge, where the battery module included six rectangular nickel metal-hydride batteries (cells) electrically connected in series, each cell had an internal resistance, the thickness of a group of electrode plates, a heat release area, the amount of electrolyte, a separator thickness, and the ionic conductivity of the electrolyte that were set to a desired value described in (1) to (6), and the thermal conductivity per battery module was changed from 0.2 to 0.4 W/m·K. In this case, the thermal conductivity per battery module was adjusted to a predetermined value by changing the mixing proportion of a resin material of the container and the thickness thereof.

**TABLE 11**

| Thermal conductivity [W/m·K] | Utilization factor [%] | Temperature rise [°C] | Cycle life |
|---|---|---|---|
| 0.2 | 82 | 13 | 400 |
| 0.3 | 95 | 6 | 900 |
| 0.4 | 96 | 5 | 1000 |

As shown in Table 11, when the thermal conductivity per battery module was 0.3 W/m K and 0.4 W/m K, the temperature rise of the battery module during charge/discharge was 6 °C and 5 °C, and the cycle life was 900 and 1000, respectively. On the other hand, when the thermal conductivity per battery module was 0.2 W/m·K, the temperature rise was increased to 13 °C and the cycle life was reduced to 400. The consideration of this result is given below. In the case where the thermal conductivity per battery module is small, heat release becomes poor. Thus, the quantity of heat generation of the battery module during charge/discharge is increased, causing an increase in the temperature rise of the battery module. The increased temperature rise promotes a reduction in charge efficiency and decomposition of the binder or the like in the electrode and separators within the cell, so that the cycle life of the battery module is shortened.

Therefore, it is desirable that thermal conductivity per battery module is 0.3 W/m·K or more.

As described above, a battery module that provides suppressed temperature rise, high power, and excellent battery characteristics even when charged/discharged repeatedly and used for a long time can be achieved in the following manner: rectangular nickel metal-hydride batteries (cells), each having a desired value described in (1) to (9), are used to form the battery module, and thermal conductivity per battery module is set to 0.3 W/m·K or more.

Next, a plurality of battery modules with the above configuration were connected electrically in series and/or in parallel to produce a battery pack. A coolant flow path was formed between the adjacent battery modules. In this case, a battery pack that provides suppressed temperature rise, high power, and excellent battery characteristics even when charged/discharged repeatedly and used for a long time also can be achieved by forming the battery park using battery modules, each having a desired value described in (9).

## Claims

1. A rectangular alkaline storage battery comprising:
a plurality of positive electrode plates (1);
a plurality of negative electrode plates (2);
a plurality of separators (3), each being located between the positive electrode plate (1) and the negative electrode plate (2);
an alkaline electrolyte, and
a container (6) for housing the positive and negative electrode plates (1, 2), the separators (3), and the electrolyte,
wherein internal resistance is 5 mΩ or less, a group of electrode plates comprising the positive and negative electrode plates (1, 2) and the separators (3) has a thickness of 30 mm or less, a heat release area is 60 cm² or more, and an amount of the electrolyte is 1.3 to 8.0 g/Ah.

2. The rectangular alkaline storage battery according to claim 1, wherein positive and negative current collecting plates (4, 5) connected to the positive electrode plates (1) and the negative electrode plates (2), respectively, are provided at both side faces of the group of electrode plates in a width direction, and the group of electrode plates is housed in the container (6) with each current collecting plate (4, 5) fixed on short side faces of the container (6).

3. The rectangular alkaline storage battery according to claim 2, wherein the positive electrode plates (1) are based on nickel oxide, and the negative electrode plates (2) contain hydrogen absorbing alloy that can absorb/desorb hydrogen electrochemically

4. The rectangular alkaline storage battery according to any one of claims 1 to 3, wherein the separator (3) has a thickness of 0.1 to 0.3 mm.

5. The rectangular alkaline storage battery according to any one of claims 1 to 3, wherein the electrolyte has an ionic conductivity of 400 to 600 mS/cm.

6. The rectangular alkaline storage battery according to any one of claims 1 to 3, wherein a material of the container (6) has a thermal conductivity of 0.15 W/m·K or more, and the container (6) has a thickness of 0.5 to 1.5 mm.

7. A battery module comprising:
3 to 40 cells electrically connected in series,
wherein the rectangular alkaline storage battery according to any one of claims 1 to 6 is used as said cell.

8. The battery module (8) according to claim 7, comprising a plurality of containers (6), each of which is in the form of a rectangular solid having short side faces (7), the width of which is smaller than the width of long side faces, the containers (6) being formed into an integral container by using the short side face as a partition between the adjacent containers (6),
wherein a group of electrode plates is housed in each container (6) so that a cell is provided for each container (6), and the cells are connected electrically in series.

9. The battery module (8) according to claim 7 or 8, wherein thermal conductivity per battery module is 0.3 W/m·K or more.

10. A battery pack comprising:
a plurality of battery modules (8) electrically connected in series and/or in parallel and
a coolant flow path formed between the adjacent battery modules,
wherein the battery module (8) according to any one of claims 7 to 9 is used as said battery module (8).

## Patentansprüche

1. Rechteckiger alkalischer Akkumulator mit:
einer Vielzahl an positiven Elektrodenplatten (1);
einer Vielzahl an negativen Elektrodenplatten (2);
einer Vielzahl an Separatoren (3), von denen sich jeder einzelne zwischen der positiven Elektrodenplatte (1) und der negativen Elektrodenplatte (2) befindet;
einem alkalischen Elektrolyt, und
einem Behälter (6) zur Aufnahme der positiven und negativen Elektrodenplatten (1, 2), der Separatoren (3) und des Elektrolyten,
wobei der Innere Widerstand 5mΩ oder weniger beträgt, eine Gruppe von Elektrodenplatten mit den positiven und negativen Elektrodenplatten (1, 2) und den Separatoren (3) eine Dicke von 30 mm oder weniger aufweist, eine Wärmeabgabefläche 60 cm² oder mehr beträgt und eine Menge des Elektrolyten 1,3 bis 8,0 g/Ah beträgt.

2. Rechteckiger alkalischer Akkumulator nach Anspruch 1, wobei positive und negative, Strom sammelnde, jeweils mit den positiven Elektrodenplatten (1) und den negativen Elektrodenplatten (2) verbundene Platten (4, 5) an beiden Seitenflächen der Gruppe der Elektrodenplatten in Richtung ihrer Breite vorgesehen sind, und die Gruppe der Elektrodenplatten in dem Behälter (6) mit jeder, an den kurzen Seitenflächen des Behälters (6) befestigte, Strom sammelnden Platte (4, 5) beherbergt ist.

3. Rechteckiger alkalischer Akkumulator nach Anspruch 2, wobei die positiven Elektrodenplatten (1) auf Nickeloxid basieren und die negativen Elektrodenplatten (2) eine Wasserstoff absorbierende Legierung enthalten, welche Wasserstoff elektrochemisch absorbieren / desorbieren kann.

4. Rechteckiger alkalischer Akkumulator nach einem der Ansprüche 1 bis 3, wobei der Separator (3) eine Dicke von 0,1 bis 0,3 mm aufweist.

5. Rechteckiger alkalischer Akkumulator nach einem der Ansprüche 1 bis 3, wobei der Elektrolyt eine Ionenleitfähigkeit von 400 bis 600 mS/cm aufweist.

6. Rechteckiger alkalischer Akkumulator nach einem der Ansprüche 1 bis 3, wobei ein Material des Behälters (6) eine Wärmeleitfähigkeit von 0,15 W/m·K oder mehr aufweist, und der Behälter (6) eine Dicke von 0,5 bis 1,5 mm aufweist.

7. Akkumulatormodul mit:
3 bis 40 elektrisch in Reihe geschalteten Zellen,
wobei der rechteckige alkalische Akkumulator nach einem der Ansprüche 1 bis 6 als diese Zelle verwendet wird.

8. Akkumulatormodul (8) nach Anspruch 7 mit einer Vielzahl an Behältern (6), von denen jeder einzelne in der Gestalt eines rechteckigen Festkörpers mit kurzen Seitenflächen (7) ist, die Breite kleiner als die Breite der langen Seitenflächen ist und die Behälter (6) in einem integralen Behälter unter Verwendung der kurzen Seitenfläche als eine Trennwand zwischen den angrenzenden Behältern (6) ausgebildet sind,
wobei eine Gruppe von Elektrodenplatten in jedem einzelnen Behälter (6) beherbergt ist, so dass eine Zelle für jeden einzelnen Behälter (6) vorgesehen ist und die Zellen elektrisch in Reihe geschaltet sind.

9. Akkumulatormodul (8) nach Anspruch 7 oder 8, wobei die Wärmeleitfähigkeit pro Akkumulatormodul 0,3 W/m·K oder mehr beträgt.

10. Akkumulatorgruppe mit:
einer Vielzahl an elektrisch in Reihe und / oder parallel geschalteten Akkumulatormodulen (8) und
einem zwischen den angrenzenden Akkumulatormodulen gebildeten Kühlmitteldurchflussweg,
wobei das Akkumulatormodul (8) nach einem der Ansprüche 7 bis 9 als dieses Akkumulatormodul (8) verwendet wird.

## Revendications

1. Batterie de stockage alcaline rectangulaire comprenant:
une pluralité de plaques d'électrodes positives (1);
une pluralité de plaques d'électrodes négatives (2);
une pluralité de séparateurs (3), chacun étant situé entre la plaque d'électrode positive (1) et la plaque d'électrode négative (2) ;
un électrolyte alcalin, et
un conteneur (6) pour loger les plaques d'électrodes positives et négatives (1, 2), les séparateurs (3), et l'électrolyte,
dans laquelle une résistance interne est de 5 mΩ ou moins, un groupe de plaques d'électrodes comprenant les plaques d'électrodes positives et négatives (1, 2) et les séparateurs (3) a une épaisseur de 30 mm ou moins, une superficie d'émission de chaleur est de 60 cm² ou plus, et une quantité de l'électrolyte est de 1,3 à 8,0 g/Ah.

2. Batterie de stockage alcaline rectangulaire selon la revendication 1, dans laquelle des plaques de collecte de courant électrique positives et négatives (4, 5) reliées aux plaques d'électrodes positives (1) et aux plaques d'électrodes négatives (2), respectivement, sont pourvues aux deux faces latérales du groupe de plaques d'électrodes dans une direction de largeur, et le groupe de plaques d'électrodes est logé dans le conteneur (6) avec chaque plaque de collecte de courant électrique (4, 5) fixée sur des faces latérales courtes du conteneur (6).

3. Batterie de stockage alcaline rectangulaire selon la revendication 2, dans laquelle les plaques d'électrodes positives (1) sont à base d'oxyde de nickel, et les plaques d'électrodes négatives (2) contiennent un alliage absorbant de l'hydrogène qui peut absorber/désorber de l'hydrogène de façon électrochimique.

4. Batterie de stockage alcaline rectangulaire selon l'une quelconque des revendications 1 à 3, dans laquelle le séparateur (3) a une épaisseur de 0,1 à 0,3 mm.

5. Batterie de stockage alcaline rectangulaire selon l'une quelconque des revendications 1 à 3, dans laquelle l'électrolyte a une conductivité ionique de 400 à 600 mS/cm.

6. Batterie de stockage alcaline rectangulaire selon l'une quelconque des revendications 1 à 3, dans laquelle un matériau du conteneur (6) a une conductivité thermique de 0,15 W/m·K ou plus, et le conteneur (6) a une épaisseur de 0,5 à 1,5 mm.

7. Module de batteries comprenant :
de 3 à 40 cellules reliées électriquement en série,
dans lequel la batterie de stockage alcaline rectangulaire selon l'une quelconque des revendications 1 à 6 est utilisée en tant que ladite cellule.

8. Module de batteries (8) selon la revendication 7, comprenant une pluralité de conteneurs (6), chacun desquels est en forme d'un élément solide rectangulaire ayant des faces latérales courtes (7), la largeur desquelles est plus petite que la largeur de faces latérales longues, les conteneurs (6) étant formés dans un conteneur intégral en utilisant la face latérale courte comme une séparation entre les conteneurs adjacents (6).
dans lequel un groupe de plaques d'électrodes est logé dans chaque conteneur (6) de sorte qu'une cellule soit pourvue pour chaque conteneur (6), et les cellules sont reliées électriquement en série.

9. Module de batteries (8) selon la revendication 7 ou 8, dans lequel une conductivité thermique par module de batteries est de 0,3 W/m·K ou plus.

10. Bloc de batteries comprenant :
une pluralité de modules de batteries (8) reliés électriquement en série et/ou en parallèle et
un chemin d'écoulement de réfrigérant formé entre les modules de batteries adjacents,
dans lequel le module de batteries (8) selon l'une quelconque des revendications 7 à 9 est utilisé en tant que ledit module de batteries (8).
